Europäisches Patentamt

European Patent Office

Office européen des brevets

(19)

(11) EP 0 721 631 B1

(12) EUROPÄISCHE PATENTSCHRIFT

(45) Veröffentlichungstag und Bekanntmachung des Hinweises auf die Patenterteilung:
**23.07.1997 Patentblatt 1997/30**

(21) Anmeldenummer: **94927488.0**

(22) Anmeldetag: **26.09.1994**

(51) Int Cl.[6]: **G06T 5/00**

(86) Internationale Anmeldenummer:
**PCT/DE94/01117**

(87) Internationale Veröffentlichungsnummer:
**WO 95/09403 (06.04.1995 Gazette 1995/15)**

(54) **VERFAHREN ZUR SEGMENTATION VON DIGITALEN FARBBILDERN**

METHOD FOR THE SEGMENTATION OF DIGITAL COLOUR IMAGES

PROCEDE DE SEGMENTATION D'IMAGES NUMERIQUES EN COULEUR

(84) Benannte Vertragsstaaten:
**DE FR GB IT**

(30) Priorität: **27.09.1993 DE 4332878**

(43) Veröffentlichungstag der Anmeldung:
**17.07.1996 Patentblatt 1996/29**

(73) Patentinhaber: **SIEMENS AKTIENGESELLSCHAFT 80333 München (DE)**

(72) Erfinder:
- **SCHUSTER, Rolf D-81739 München (DE)**
- **AHMAD, Subutai Palo Alto, CA 94303 (US)**

(56) Entgegenhaltungen:
**EP-A- 0 122 543          EP-A- 0 522 702**

- **PATENT ABSTRACTS OF JAPAN vol. 13, no. 505 (P-959) 14. November 1989 & JP,A,01 204 186 (NEC CORP) 16. August 1989**
- **PATENT ABSTRACTS OF JAPAN vol. 9, no. 273 (P-401) 30. Oktober 1985 & JP,A,60 117 375 (YOKOKAWA HOKUSHIN DENKI KK)**
- **PATENT ABSTRACTS OF JAPAN vol. 17, no. 369 (P-1572) 12. Juli 1993 & JP,A,05 060 616 (MATSUSHITA ELECTRIC IND CO)**
- **PATENT ABSTRACTS OF JAPAN vol. 13, no. 505 (P-959) 14. November 1989 & JP,A,01 204 186 (NEC CORP)**

EP 0 721 631 B1

**Beschreibung**

Die Erfindung betrifft ein Verfahren zur Segmentation von digitalen Farbbildern auf der Grundlage von Farbhistogrammen. Das Interesse an der Farbbildverarbeitung ist in den letzten Jahren deutlich gestiegen. Diese Tatsache entspricht dem Wunsch, Farbe als zusätzliche Informationsquelle nutzbar zu machen und wird unterstützt durch eine deutlich gewachsene Rechnerleistung und neue Erkenntnisse auf dem Gebiet der Reflexionsmodelle (Shafer, S. A. Optical phenomena in computer Vision, proceedings of the CSCSI-84, Canadian Society for Computational Studies of Intelligence, London, Ontario, Canada, May 1984), (Nayar, S. K., Ikeuchi, K., und Kanada, T. Surface Reflection: Physical and Geometrical Perspectives, PAMI 13,7 (July 1991), 611 - 634). Ein wichtiges und in vielen Bereichen der Farbbildverarbeitung eingesetztes Werkzeug ist das sogenannte Farbhistogramm. In der Literatur sind verschiedene Anwendungen der Farbhistogramme zur Farbbildsegmentierung (Celenk, M. A., Color Clustering Technique for Image Sementation, Computer Vision, Graphics and Image Processing 52 (1990), 145 - 170) zur Farbobjekterkennung (Swain, M. J. und Ballard, D. H., Color Indexing. International Journal of Computer Vision 7 (1991), 11 - 32) sowie zur dreidimensionalen Rekonstruktion (Sato, Y. und Ikeuchi, K., "Temporal-Color Space Analysis", Carnegie-Mellon-University, Technical Report No. CMU-CS-92-207, November 1992) beschrieben worden. Bei diesen bekannten Arbeiten werden lediglich die Hauptkomponenten der Objekthistogramme untersucht; dabei gehen verschiedene wichtige Informationen der Farbhistogramme wie Glanzlichter aber auch Störeinflüsse wie Kamerarauschen und Übersteuerung verloren. Die bekannten Formen der Anwendungen von Farbhistogrammen zur Objektsegmentation sind daher häufig nicht flexibel genug, um unterschiedlichen Reflexionseigenschaften und Beleuchtungsverhältnissen bei der Gegenwart verschiedenartiger Objekte Rechnung zu tragen.

Der Erfindung liegt die Aufgabe zugrunde, ein Verfahren zur Segmentation von digitalen Farbbildern anzugeben, das flexibler ist als die bekannten Verfahren, besonders im Hinblick auf eine zutreffende Beschreibung unterschiedlichster Reflexionseigenschaften von verschiedenartigen Objekten.

Diese Aufgabe wird erfindungsgemäß durch ein Verfahren zur Segmentation von digitalen Farbbildern mit Merkmalen nach Anspruch 1 gelöst. Bei dem erfindungsgemäßen Verfahren werden farbige Objekte durch binarisierte Farbhistogramme repräsentiert, und zur Segmentation digitaler Farbbilder verwendet. Dabei entsprechen die binären Werte der Farbhistogramme einer Entscheidung darüber, ob ein Bildpunkt zu einem gegebenem Objektsegment gehören kann oder nicht. Modellbasierte Parametrisierungen dieser Farbhistogramme werden zur effizienten Durchführung der Segmentation bevorzugt. Sie ermöglichen insbesondere eine Adaption der Farbhistogramme an zeitlich veränderliche Beleuchtungsverhältnisse mit vertretbarem Aufwand.

Bei dem erfindungsgemäßen Verfahren zur Segmentation von digitalen Farbbildern wird mindestens ein binarisiertes Farbhistogramm, welches die charakteristischen Farbeigenschaften mindestens eines abgebildeten Objekts beschreibt, dazu verwendet, zu entscheiden, ob ein Bildpunkt eines in Objektsegmente zu zerlegenden Farbbildes zu einem bestimmten Objektsegment gehört oder nicht, wobei geprüft wird, ob dem Farbwert dieses Bildpunktes ein Wert des zu diesem Objekt gehörenden binarisierten Farbhistogramms zugeordnet ist, der auf die Zugehörigkeit dieses Bildpunktes zu diesem Objektsegment hinweist. Bei einer bevorzugten Ausführungsform des erfindungsgemäßen Verfahrens werden die binarisierten Farbhistogramme in Form einer binärwertigen Tabelle im Datenverarbeitungssystem gespeichert, welche jedem Farbwert, der zu einem durch dieses Farbhistogramm charakterisierten Objekt gehört, einen ersten binären Wert und allen anderen Farbwerten den entgegengesetzten binären Wert zuordnet.

Alternativ hierzu werden bei einer zweiten bevorzugten Ausführungsform des erfindungsgemäßen Verfahrens die Werte von binarisierten Farbhistogrammen durch Anwendung einer Schwellwertoperation auf ein normalisiertes Farbhistogramm ermittelt, wobei dieses normalisierte Farbhistogramm nicht in Form einer Wertetabelle sondern in Gestalt eines Satzes von Parametern einer parametrischen Funktion oder eines Satzes von parametrischen Funktionen in dem Datenverarbeitungssystem gespeichert wird.

Bei einer Anwendung des erfindungsgemäßen Verfahrens auf zeitliche Folgen digitaler Bilder werden die Werte dieser Parameter schrittweise an eine sich zeitlich verändernde Beleuchtungssituation angepaßt. Vorzugsweise aber nicht zwangsläufig werden im Zusammenhang mit den erfindungsgemäßen Verfahren dreidimensionale Farbhistogramme, z. B. im sogenannten RGB-Raum verwendet.

Vorteilhafte Weiterbildungen der Erfindung ergeben sich aus den Unteransprüchen.

Im folgenden wird die Erfindung anhand bevorzugter Ausführungsbeispiele näher beschrieben. Die Farbe eines Objektes, die mit einer Farbkamera aufgenommen wird, ist abhängig von zahlreichen Einflußgrößen, wie z. B. dem Spektrum der Lichtquelle, der Geometrie der räumlichen Anordnung, Reflexionseigenschaften der Objektoberfläche oder von spektralen Eigenschaften der Kamera. Trotzdem gibt es bei natürlichen zwei- und dreidimensionalen Objekten typische Farbverteilungen und damit auch definierte Strukturen im Farbhistogramm. Hierbei wird unter einem Farbhistogramm eine empirische Häufigkeitsverteilung des Auftretens bestimmter Farbwerte in einem Farbbild oder innerhalb eines Objektsegments eines Farbbildes verstanden. Dabei wird jedem Punkt eines Farbraums, vorzugsweise jedem Punkt des dreidimensionalen RGB-Raums ein Histogrammwert, nämlich seine Häufigkeit, d. h. die Zahl der Bildpunkte, welche diesen Farbwert besitzen, zugeordnet. Normiert man ein derartiges Histogramm, so, daß die Summe der Histogrammwerte über alle Punkte des Farbraums 1 ergibt, spricht man von einem normalisierten Farbhistogramm. Jeder Wert dieses Farbhistogramms kann dann als Wahrscheinlichkeit für das Auftreten eines bestimmten Farbwertes in dem betreffenden Bild interpretiert werden. 1984 zeigte L. A. Shafer, daß dichromatische Materialien mit Glanzlichtern im Farbhistogramm ein Parallelogramm bilden, dessen Eigenschaften von Körper- und Oberflächen-Reflexionsvektoren bestimmt sind. Drei Jahre später beobachteten Klinker und Gershon unabhängig voneinander, daß dieses Parallelogramm nicht gleichzeitig ausgefüllt ist, sondern durch eine T-Form, die auch als Dog-Leg bezeichnet wird, beschrieben werden kann (Klinker, G. J., Shafer, S. A., Kanade, T. "Using a color reflecting model to separate highlights from objects color". Image Understanding Workshop Proceedings, Los Angeles, Februar 1987), (Gershon, R. The Use of Color in Computational Vision, DHP Dissertation, University of Toronto, 1987). Typische Histrogramme von Farbobjekten bestehen aus sogenannten Clustern, also zusammenhängenden, mit signifikanten Werten belegten Bereichen im Farbhistogramm.

Das Abstract zu JP-A-60 117 375 offenbart die Segmentierung von Objekten in einem Bild mit Hilfe von Farbhistogrammen, wobei aus einem "Grauwert"histogramm, welcher Grauwert aus den drei Farbkomponenten berechnet wird, ein Schwellwert der Intensität zur Trennung in Vorder- und Hintergrund ermittelt wird.

Ausgehend von derartigen Histrogramm-Strukturen werden in der vorliegenden Patentanmeldung im folgenden drei Modelle definiert, die in ihrer unterschiedlichen Komplexität den unterschiedlichen Reflexionseigenschaften von Objekten Rechnung tragen. Im Unterschied zu den oben genannten Arbeiten wird eine exakte mathematische Beschreibung der Verteilung innerhalb der Cluster entwickelt, die sowohl die Richtungskomponenten als auch die Varianzen der Cluster beinhaltet. Diese Modelle sind besonders dazu geeignet, Farbobjekte im Farbhistogrammraum zu repräsentieren. Diese drei Modelle, ein Ellipsoid- ein Zylinder- und ein Mischungsdichte-Modell sind in ihrer Struktur und Komplexität so gewählt, daß sie die typischen Histogramme von realen Farbobjekten gut approximieren. Im Gegensatz zu früheren Arbeiten, in denen lediglich die Hauptkomponenten der Objekthistogramme untersucht wurden, geht es hier um eine vollständige und exakte Beschreibung der Objekthistogramme einschließlich sämtlicher Störeinflüsse, wie Kamerarauschen, Glanzlichter, Übersteuerung etc.

Aus einem digitalen Farbbild kann ein Objekthistogramm, also eine Häufigkeitsverteilung auf dem Raum aller Farbwerte unter Einbeziehung aller Bildpunkte eines Objektes, erzeugt werden. Das Objekthistogramm wird vorzugsweise als diskrete, dreidimensionale Wahrscheinlichkeitsverteilung betrachtet, und deshalb wird die Normierung

$$H(v)=\{h(v_1),...,h(v_n)\},$$

$$\sum_i h(v_i) = 1$$

gewählt. Im folgenden wird die mathematische Beschreibung der Histogrammwerte für das Ellipsoid- das Zylinder- und das Mischungsdichtemodell dargestellt.

Ellipsoid-Modell

Zur Beschreibung relativ einfacher, kompakter Cluster mit ellipsoidförmiger Ausdehnung und einer internen Verteilung, die durch eine einfache oder eine multivariate, dreidimensionale Gaußfunktion beschrieben werden kann eignet sich eine Gaußfunktion mit diagonaler Kovarianzmatrix. Ein derartiges Modell ist für einfache Farbobjekte geeignet, die relativ gleichmäßig beleuchtet werden. Einerseits hat diese Funktion durch ihre achsensymmetrischen Eigenschaften nur begrenzte Anpassungsfähigkeit. Andererseits müssen nur sechs freie Parameter bestimmt werden. Erweitert man diese Funktion um die Kovarianzen so erhält man die allgemeine multivariate Normalverteilung mit nichtverschwindenden Kovarianzen. Mit dieser Funktion können auch Cluster beschrieben werden, die z. B. achsensymmetrisch zur Diagonalen der xy-Ebene sind. Beachtet man die Symmetrie der Kovarianzmatrix, dann sind bei dieser Funktion neun freie Parameter zu bestimmen.

Prinzipiell lassen sich die Parameter mit den Standardgleichungen der Wahrscheinlichkeitsrechnung direkt bestimmen. Zur Verbesserung der Genauigkeit benutzen wir zusätzlich ein iteratives Verfahren, das die Fehlerquadrate

$$E(p) = \sum_i \left[f(v_i,p) - h(v_i)\right]^2$$

minimiert. Dabei enthält p die unbekannten Funktionsparameter. Als Startwerte für das iterative Verfahren werden die Ergebnisse der direkten Parameterbestimmung benutzt. Zur Minimierung von E(p) kann z. B. ein statistisches Optimierungsverfahren für mehrere Variablen ohne Nebenbedingungen eingesetzt werden (Papageorgiou, M. Optimierung: statische, dynamische, stochastissche Verfahren für die Anwendung, R. Oldenbourg Verlag (1991)).

Zylinder-Modell

Dieses Modell ist für lange, annähernd achsensymmetrische Cluster besonders geeignet, die abschnittsweise durch Zylinderscheiben beschrieben werden können. Dieses Modell eignet sich besonders für dreidimensionale Farbobjekte ohne ausgeprägte Glanzlichter. Für die mathematische Beschreibung dieser Clusterform wird der Clusterschwerpunkt b und die Richtung der Hauptachse a bestimmt. Danach wird eine Koordinatentransformation angewendet, so daß die x-Achse in Richtung der Clusterhauptachse zeigt. Der gewichtete ClusterSchwerpunkt berechnet sich aus

$$b = \frac{1}{n} \sum_{i=1}^{n} v_i h(v_i) \, .$$

Durch die Berechnung der Eigenvektoren,

$$A = QSR^T \text{ mit } A = [h(v_1)(v_1 - b)...h(v_n)(v_n - b)]$$

und $Q = [q_1 \, q_2 \, q_3]$,

$$S = \begin{bmatrix} \lambda_1 & 0 & 0 & & 0 \\ 0 & \lambda_2 & 0 & \cdots & 0 \\ 0 & 0 & \lambda_3 & & 0 \end{bmatrix},$$

$R = [r_1...r_n]$
wird die Hauptachse a=q1 bestimmt.

Im Unterschied zur üblichen Eigenwertanalyse im dreidimensionalen Vektorraum werden hier die Histogrammwerte als Gewichte der einzelnen Vektoren mit einbezogen. Die Gleichung für die Koordinatentransformation lautet dann

$$v_i^{'} = (v_i - b)R_y R_z$$

für i=1...n
dabei sind Ry bzw. Rz die Rotationsmatrizen für die Rotation um die y- bzw. die z-Achse. Die Rotationswinkel ergeben sich direkt aus dem Richtungsvektor a. Jetzt wird auf der x'-Achse eine neue Skalierung mit Δl-Schritten und eine Diskretisierung mit leZ vorgenommen. Damit wird der Cluster in dünne Scheiben eingeteilt, deren Histogrammwerte hl(x',y') z. B. mit einer zweidimensionalen Gaußfunktion

$$f_l(y', z') = \frac{1}{2\pi\sigma_{y'}\sigma_{z'}} \exp\left(-\frac{1}{2}\left(\frac{(y'-\mu_{y'})^2}{\sigma_{y'}^2} + \frac{(z'-\mu_{z'})^2}{\sigma_{z'}^2}\right)\right)$$

approximiert werden können.
Wie beim Ellipsoid-Modell kann diese Beschreibung durch die Kovarianzen erweitert werden. Für erhöhte Genauigkeit wird auch hier ein iteratives Verfahren eingesetzt. Für kleine $\Delta 1$ kann das Zylinder-Modell achsensymmetrische Clusterformen sehr genau beschreiben.

Mischungsdichte-Modell

Dieses Modell beschreibt den Cluster als Mischungsdichte von Dichtefunktionen. Das Modell kann beliebig geartete Cluster beschreiben und eignet sich daher für komplexe Farbobjekte mit Glanzlichtern, Textur etc. Auch das oben erwähnte T-förmige Reflexionsmodell kann mit dem Mischungsdichte-Modell beschrieben werden.

Hierbei ist zu beachten, daß für die vollständige Repräsentation eines Farbobjektes auch mehrere Modelle gleicher oder unterschiedlicher Art kombiniert werden können. Ein zweifarbiges dreidimensionales Objekt mit einem Glanzlicht kann sich z. B. aus zwei zylinderförmigen und einem ellipsoiden Cluster zusammensetzen.

Das Mischungsdichtemodell wird durch die Summation von i gewichteten Dichtefunktionen beschrieben

$$p(v_k|\Theta) = \sum_i \alpha_i \cdot n(v_k, \theta_i) \quad \text{mit} \quad \sum_i \alpha_i = 1 \quad \text{und} \quad \alpha_i \geq 0$$

wobei $n(v_k, \theta_i)$ eine beliebige Dichtefunktion sei kann. $\theta_i$ enthält die Parameter einer Dichtefunktion, $\Theta$ enthält die Parameter $\theta_i$ und die Gewichte $\alpha_i$ von allen i Dichtefunktionen. Die Parameter werden mit dem EM-Algorithmus (expected maximum) bestimmt. Bei diesem iterativen Verfahren sind die Aktualisierungsgleichungen für die nächste Interation gegeben durch

$$\alpha_i^+ = \frac{\sum_{k=1}^{n} h(v_k) \cdot p^c(i|v_k)}{\sum_{k=1}^{n} h(v_k)} \;,\quad \mu_i^+ = \frac{\sum_{k=1}^{n} v_k \cdot h(v_k) p^c(i|v_k)}{\sum_{k=1}^{n} h(v_k) p^c(i|v_k)}$$

und

$$\Sigma_i^+ = \frac{\sum_{k=1}^{n} (v_k - \mu_i^c)(v_k - \mu_i^c)^T \cdot h(v_k) p^c(i|v_k)}{\sum_{k=1}^{n} h(v_k) p^c(i|v_k)} \;,$$

wobei

$$p^c(i|v_k) = \frac{\alpha_i^c \cdot n(v_k|\theta_i^c)}{p(v|\Theta^c)} \;.$$

Im Unterschied zum Standard-EM-Algorithmus berücksichtigt diese Formulierung auch die Gewichtung der Histogrammelemente h(v).

Ein für Zwecke dieser Patentanmeldung geeigneter Überblick über den Problembereich des EM-Algorithmus und die Darstellung eines Anwendungsbeispiels findet sich z. B. bei (Redner, R. A. und Walker, H. F. Mixture Densities, Maximum Likelihood and the EM Algorithm. SIAM Review 26, 2 (April 1984), 195 - 239), (Nowlan, S. J. Maximum Likelihood Competitive Learning. In Advances in Neural Information Processing Systems 4, 574 - 582, 1990).

Bei vielen bekannten Verfahren zu histogrammbasierten Farbbild-Segmentierung wird der Intensitätsanteil der Farbe durch die Berechnung von Farbwertanteilen eliminiert (Richter, M. Einführung in die Farbmetrik, Walter de Gruyter, 2. Aufl. 1980) und die Klassifikation in der zweidimensionalen Ebene die auch als Farbtafel bezeichnet wird, durchgeführt (Batchelor, B.G. "color Recognition in Prolog", in SPIE Machine Vision Applications, Architectures and Systems Integration, SPIE, 1992). Diese Normierung bedingt einerseits eine gute Farbkonstanz hat aber andererseits den Nachteil, daß hierdurch die Dimension des Farbraums um 1 reduziert wird und hierdurch unter Umständen wichtige Klassifikationsmerkmale verloren gehen. In diesem Zusammenhang eignen sich die oben beschriebenen Modelle für die Farbbildsegmentierung im dreidimensionalen Farbraum mit den beiden Klassen "Objekt" und "Hintergrund". Dazu muß der kontinuierliche Wertebereich des Histogramms bzw. der parametrisierten Modellfunktion die das Histogramm repräsentiert, in einen binären Wertebereich umgewandelt werden. Bei allen drei Modellen wird die Binarisierung durch eine einfache Schwellwertbildung erreicht

$$f_b(v) = \begin{cases} 0 & \text{für } f_{1,2}(v) \geq \varepsilon \text{ bzw. } p(v_k|\Theta) \geq \varepsilon \\ 0 & \text{sonst} \end{cases}.$$

Der Schwellwert $\varepsilon$ ist abhängig von der angestrebten Genauigkeit der Farbobjekt-Segmentierung und der Farbverteilung im Objekthintergrund. Ist der Objekthintergrund bekannt, so kann die Schwellwertbestimmung automatisiert werden. Die binarisierten, dreidimensionalen Modellfunktionen lassen sich direkt dazu verwenden, in einem Farbbild die Klassifikation Objekt/Hintergrund durchzuführen. Diese Lösung ist aber weder besonders speichersparend noch besonders zeiteffizient. Häufig ist es deshalb, gerade bei echtzeitfähigen Implementierungen des Verfahrens vorteilhaft, die Modellfunktionen durch Tabellen mit einem effizienten Zugriffsmechanismus zu repräsentieren. Das erfindungsgemäße Verfahren wurde für alle drei beschriebenen Modelle auf reale Bilddaten angewendet und die jeweiligen Approximationsfehler miteinander verglichen. Die verwendeten RGB-Farbbilder wurden mit einer CCD-Kamera aufgenommen. Als Lichtquellen wurden Neonnitrid-Lampen mit einer Farbtemperatur von 3200 Kelvin verwendet. Die Histogramme haben jeweils eine Auflösung von 64 x 64x 64 Farbwerten. Die Qualität der drei Modellfunktionen wurde mit Hilfe von realen Bildern verglichen. Als Maß für die Qualtität wurde die Summe der quadratischen Fehler verwendet. Wie zu erwarten erreicht das flexibleste, nämlich das Mischungsdichte-Modell für alle Bilder die jeweils geringsten Abweichungen und ist damit am besten geeignet, Farbobjekthistogramme zu approximieren. Je nach Anwendung können jedoch auch die anderen Modellfunktionen Vorteile aufweisen, da sie eine einfachere und weniger aufwendigere Beschreibung von Farbbildern ermöglichen.

In dieser Patentanmeldung wurden die folgenden Veröffentlichungen zitiert:

1. Shafer, S. A. Optical phenomena in computer Vision, proceedings of the CSCSI-84, Canadian Society for Computational Studies of Intelligence, London, Ontario, Canada, May 1984.

2. Nayar, S. K., Ikeuchi, K., und Kanada, T. Surface Reflection: Physical and Geometrical Perspectives, PAMI 13,7 (July 1991), 611 - 634.

3. Celenk, M. A., Color Clustering Technique for Image Sementation, Computer Vision, Graphics and Image Processing 52 (1990), 145 - 170.

4. Swain, M. J. und Ballard, D. H., Color Indexing. International Journal of Computer Vision 7 (1991), 11 - 32) sowie zur dreidimensionalen Rekonstruktion.

5. Sato, Y. und Ikeuchi, K., "Temporal-Color Space Analysis", Carnegie-Mellon-University, Technical Report No. CMU-CS-92-207, November 1992.

6. Klinker, G. J., Shafer, S. A., Kanade, T. "Using a color reflecting model to separate highlights from objects color". Image Understanding Workshop Proceedings, Los Angeles, Februar 1987.

7. Gershon, R. The Use of Color in Computational Vision, DHP Dissertation, University of Toronto, 1987.

8. Papageorgiou, M. Optimierung: statische, dynamische, stochastissche Verfahren für die Anwendung, R. Oldenbourg Verlag (1991).

9. Redner, R. A. und Walker, H. F. Mixture Densities, "Maximum Likelihood and the EM Algorithm". SIAM Review 26, 2 (April 1984), 195 - 239.

10. Nowlan, S. J. "Maximum Likelihood Competitive Learning", in Advances in Neural Information Processing Systems 4, 574 - 582, 1990.

11. Richter, M. Einführung in die Farbmetrik, Walter de Gruyter, 2. Aufl. 1980.

12. Batchelor, B.G. "Color Recognition in Prolog", in SPIE Machine Vision Applications, Architectures and Systems Integration, SPIE, 1992.

## Patentansprüche

1. Verfahren zur Segmentation von digitalen Farbbildern mit Hilfe eines elektronischen Datenverarbeitungssystems, bei dem mindestens ein binarisiertes Farbhistogramm, welches die charakteristischen Farbeigenschaften mindestens eines abgebildeten Objekts beschreibt, dazu verwendet wird, zu entscheiden, ob ein Bildpunkt eines in Objektsegmente zu zerlegenden Farbbildes zu einem bestimmten Objektsegment gehört oder nicht, wobei geprüft wird, ob dem Farbwert dieses Bildpunktes ein Wert des zu diesem Objekt gehörenden binarisierten Farbhistogramms zugeordnet ist, der auf die Zugehörigkeit dieses Bildpunkts zu diesem Objektsegment hinweist.

2. Verfahren nach Anspruch 1, bei dem ein binarisiertes Farbhistogramm in Form einer binärwertigen Tabelle im Datenverarbeitungssystem gespeichert wird, welche jedem Farbwert, der zu einem durch dieses Farbhistogramm charakterisierten Objekt gehört, einen ersten binären Wert und allen anderen Farbwerten den entgegengesetzten binären Wert zuordnet.

3. Verfahren nach Anspruch 1, bei dem Werte eines binarisierten Farbhistogramms durch Anwendung einer Schwellwertoperation auf ein normalisiertes Farbhistogramm ermittelt werden, welches nicht in Form einer Wertetabelle, sondern in Gestalt eines Satzes von Parametern einer parametrischen Funktion oder eines Satzes von parametrischen Funktionen in dem Datenverarbeitungssystem gespeichert wird.

4. Verfahren nach Anspruch 3, bei dem die Werte der Parameter schrittweise an eine sich zeitlich verändernde Beleuchtungssituation einer zeitlichen Folge digitaler Bilder angepaßt werden.

5. Verfahren nach einem der vorhergehenden Ansprüche, bei dem dreidimensionale Farbhistogramme verwendet werden.

## Claims

1. Method for the segmentation of digital colour images with the aid of an electronic data processing system, in which at least one digitized colour histogram which describes the characteristic colour properties of at least one imaged object is used for the purpose of determining whether a pixel of a colour image which is to be decomposed into object segments belongs to a specific object segment or not, it being checked whether there is assigned to the colour value of this pixel a value of the digitized colour histogram belonging to this object which indicates the association of this pixel with this object segment.

2. Method according to Claim 1, in which a binarized colour histogram is stored in the data processing system in the form of a table of binary values which assigns a first binary value to each colour value which belongs to an object characterized by this colour histogram, and assigns the opposite binary value to all other colour values.

3. Method according to Claim 1, in which values of a binarized colour histogram are determined by applying a threshold operation to a normalized colour histogram which is stored in the data processing system not in the form of a table of values but as a set of parameters of a parametric function or as a set of parametric functions.

4. Method according to Claim 3, in which the values of the parameters are adapted in a stepwise fashion to a temporally varying lighting situation of a temporal sequence of digital images.

5. Method according to one of the preceding claims, in which three-dimensional colour histograms are used.

**Revendications**

1. Procédé de segmentation d'images numériques en couleur à l'aide d'un système électronique de traitement de données, dans lequel on utilise au moins un histogramme de couleurs converti en binaire, lequel décrit les propriétés caractéristiques des couleurs d'au moins un objet représenté, pour décider si un point d'image d'une image en couleur à diviser en segments d'objet appartient ou non à un segment d'objet défini, en examinant si à la valeur de couleur de ce point d'image est attribuée une valeur de l'histogramme de couleurs converti en binaire appartenant à cet objet, qui renseigne sur l'appartenance de ce point d'image à ce segment d'objet.

2. Procédé selon la revendication 1, dans lequel on stocke un histogramme de couleurs converti en binaire dans un système de traitement de données sous la forme d'une table de valeurs binaires, laquelle attribue à chaque valeur de couleur appartenant à un objet caractérisé par cet histogramme de couleurs une première valeur binaire et à toutes les autres valeurs de couleur la valeur binaire opposée.

3. Procédé selon la revendication 1, dans lequel on calcule les valeurs d'un histogramme de couleurs converti en binaire en appliquant une opération seuil à un histogramme de couleurs normalisé qui est stocké dans le système de traitement de données non pas sous la forme d'une table de valeurs, mais sous la forme d'un groupe de paramètres d'une fonction paramétrique ou d'un groupe de fonctions paramétriques.

4. Procédé selon la revendication 3, dans lequel on adapte progressivement les valeurs des paramètres à une situation d'éclairage variable dans le temps d'une séquence chronologique d'images numériques.

5. Procédé selon l'une des revendications précédentes, selon lequel on utilise des histogrammes de couleurs tridimensionnels.